# DEMANDE DE BREVET EUROPEEN

(11) **EP 4 799 938 A1**
(43) Date de publication de la demande: **02.09.2026**
(21) Numéro de dépôt: 26160775.8
(22) Date de dépôt: 25.02.2026
(51) Int. Cl.: B64D 27/40, B64D 27/18

(54) **SYSTÈME DE PROPULSION POUR AÉRONEF COMPORTANT UNE TURBOMACHINE, UN MÂT D'ACCROCHAGE ET DES MOYENS DE FIXATION DE LA TURBOMACHINE AU MÂT D'ACCROCHAGE**

(30) Priorité: 28.02.2025 FR 2502070
(71) Demandeur: Airbus Operations (S.A.S.), 31060 Toulouse Cedex 9 (FR)
(72) Inventeur: PAUTIS, Olivier, 31060 TOULOUSE (FR); SILLIERES, Lionel, 31060 TOULOUSE (FR); VANDERBAUWEDE, Simon, 31060 TOULOUSE (FR); CHARTON, Nicolas, 31060 TOULOUSE (FR); VINOT, Julien, 31060 TOULOUSE (FR)
(74) Mandataire: Cabinet Le Guen Maillet

(57) **Abrégé**

L'invention concerne un système de propulsion (100) pour aéronef comportant une turbomachine (102) comportant un carter avant (103) avec une face arrière (103a) et un carter arrière (105), un mât d'accrochage (104) avec une partie frontale (106a) et auquel est fixée une ferrure arrière (108), une arche (152) fixée à la ferrure arrière (108) et au carter arrière (105), et de part et d'autre du plan médian vertical (P), et un ensemble de six bielles réparties de part et d'autre du plan médian vertical (P), et où chacune est fixée à la face arrière (103a) du carter avant (103) et à l'arche (152) et où deux à deux, les bielles convergent l'une vers l'autre au niveau de l'arche (152).

## Description

### DOMAINE TECHNIQUE

La présente invention concerne le domaine général de fixation d'une turbomachine sous l'aile d'un avion. Il s'agit notamment d'un système de propulsion comprenant une turbomachine, en particulier un moteur à double flux, un mât d'accrochage et des moyens de fixation de la turbomachine sous le mât d'accrochage. Elle s'applique également à un aéronef équipé d'un tel système de propulsion.

### ÉTAT DE LA TECHNIQUE ANTÉRIEURE

Un système de propulsion de l'état de la technique est fixé sous l'aile d'un aéronef. Il comporte une turbomachine et un mât d'accrochage par lequel la turbomachine est fixée sous l'aile. Le mât d'accrochage possède une structure rigide, également appelée structure primaire, avec des moyens de fixation pour fixer la turbomachine.

Ces moyens de fixation sont constitués entre autres d'une fixation avant de la turbomachine, d'une fixation arrière de la turbomachine et d'un dispositif pour reprendre les efforts de poussée générés par la turbomachine.

Le mât d'accrochage comporte également d'autres éléments de fixation qui assurent la fixation du mât d'accrochage à l'aile.

Les documents US-A-2025/010998, US-A-2013/160459 et US-B-9,238,511 divulguent des systèmes de propulsion de l'état de la technique.

Bien qu'une telle structure soit satisfaisante, il est souhaitable de trouver un arrangement alternatif qui permet, entre autres, d'avoir une liaison isostatique entre la turbomachine et le mât d'accrochage, tout en choisissant les chemins d'efforts les plus adaptés.

### EXPOSE DE L'INVENTION

Un objet de la présente invention est de proposer un système de propulsion comprenant une turbomachine, un mât d'accrochage et des moyens de fixation de la turbomachine sous le mât d'accrochage.

À cet effet, est proposé un système de propulsion pour un aéronef, ledit système de propulsion comportant :
- une turbomachine s'étendant autour d'un axe longitudinal et présentant un plan médian vertical contenant l'axe longitudinal et comportant un carter avant avec une face arrière perpendiculaire à l'axe longitudinal et un carter arrière,
- un mât d'accrochage présentant une structure rigide avec une partie frontale et un longeron inférieur auquel est fixée une ferrure arrière,
- une attache moteur avant qui est fixée entre une partie supérieure du carter avant et la partie frontale de la structure rigide,
- une arche avec une base fixée de manière articulée à la ferrure arrière et deux bras disposés de part et d'autre du plan médian vertical, chaque bras présentant une première extrémité solidaire de la base et une deuxième extrémité fixée de manière articulée au carter arrière,
- deux bielles centrales disposées de part et d'autre du plan médian vertical, où chaque bielle centrale est fixée à la face arrière du carter avant par un premier point de liaison centrale et à l'arche par un deuxième point de liaison centrale, où les deux bielles centrales convergent l'une vers l'autre au niveau des deuxièmes points de liaison centrale,
- deux bielles bâbord disposées à bâbord du plan médian vertical, où chaque bielle bâbord est fixée à la face arrière du carter avant par un premier point de liaison bâbord et à l'arche par un deuxième point de liaison bâbord, où les deux bielles bâbord convergent l'une vers l'autre au niveau des deuxièmes points de liaison bâbord,
- deux bielles tribord disposées à tribord du plan médian vertical où chaque bielle tribord est fixée à la face arrière du carter avant par un premier point de liaison tribord et à l'arche par un deuxième point de liaison tribord, où les deux bielles tribord convergent l'une vers l'autre au niveau des deuxièmes points de liaison tribord.

Un tel arrangement permet, entre autres, d'avoir une liaison isostatique entre la turbomachine et le mât d'accrochage.

Avantageusement, la ferrure arrière et l'arche sont inscrites dans un même plan d'intégration perpendiculaire à l'axe longitudinal.

Avantageusement, la bielle centrale à bâbord du plan médian vertical et l'une des bielles bâbord convergent l'une vers l'autre au niveau du premier point de liaison centrale et du premier point de liaison bâbord correspondants.

Avantageusement, la bielle centrale à tribord du plan médian vertical et l'une des bielles tribord convergent l'une vers l'autre au niveau du premier point de liaison centrale et du premier point de liaison tribord correspondants.

Avantageusement, le système de propulsion comporte en outre de part et d'autre du plan médian vertical, une bielle complémentaire, où chaque bielle complémentaire est fixée à la face arrière du carter avant par un premier point de liaison complémentaire et à l'arche par un deuxième point de liaison complémentaire.

Avantageusement, la bielle complémentaire à bâbord du plan médian vertical et l'autre des bielles bâbord convergent l'une vers l'autre au niveau du premier point de liaison bâbord et du premier point de liaison complémentaire correspondants, et la bielle complémentaire à tribord du plan médian vertical et l'autre des bielles tribord convergent l'une vers l'autre au niveau du premier point de liaison tribord et du premier point de liaison complémentaire correspondants.

Avantageusement, la fixation entre la base et la ferrure arrière est assurée, d'une part, par deux bielles arrière disposées symétriquement de part et d'autre du plan médian vertical, où chaque bielle arrière est fixée de manière articulée par un premier point de liaison à la ferrure arrière et par un deuxième point de liaison à la base, et, d'autre part, au niveau du plan médian vertical, par un troisième point de liaison entre la base et la ferrure arrière. Avantageusement, les bielles arrière sont inscrites dans le plan d'intégration. Avantageusement, la fixation entre la deuxième extrémité de chaque bras et le carter arrière est assurée par deux paires de biellettes disposées symétriquement par paire, de part et d'autre du plan médian vertical, et où chaque biellette est inscrite dans un plan perpendiculaire à l'axe longitudinal, et où chaque biellette est fixée de manière articulée à la deuxième extrémité du bras qui est du même côté par un premier point de liaison et au carter arrière par un deuxième point de liaison.

Avantageusement, les biellettes sont inscrites dans le plan d'intégration.

Avantageusement, pour chaque paire de biellettes, les deux biellettes sont disposées symétriquement de part et d'autre d'un plan horizontal passant par l'axe longitudinal. Avantageusement, l'attache moteur avant comporte une ferrure avant fixée à la partie frontale, deux bielles avant disposées symétriquement de part et d'autre du plan médian vertical et un pion vertical solidaire de la ferrure avant ou du carter avant et logé dans un alésage respectivement du carter avant ou de la ferrure avant, où chaque bielle avant est fixée de manière articulée par un premier point de liaison à la ferrure avant et par un deuxième point de liaison au carter avant.

L'invention concerne un aéronef comportant un système de propulsion selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une représentation schématique en perspective d'un système de propulsion selon l'invention,
Fig. 3 est une vue en coupe selon le plan de coupe III de la Fig. 2, et
Fig. 4 est une vue en coupe selon le plan de coupe IV de la Fig. 2.

### EXPOSÉ DÉTAILLÉ DE MODES DE RÉALISATION

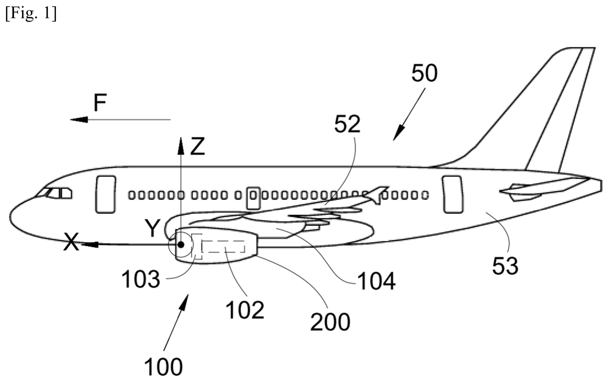

La Fig. 1 montre un aéronef 50 qui présente un fuselage 53 de chaque côté duquel une aile 52 est fixée. Sous chaque aile 52 est fixé un système de propulsion 100 selon l'invention et qui comprend un mât d'accrochage 104 et une turbomachine 102 qui est logée ici dans une nacelle 200. L'invention s'applique à tous type de turbomachine 102 comme par exemple un turboréacteur à double flux ou un turbopropulseur à soufflante non carénée.

Le système de propulsion 100 est fixé à l'aile 52 par le mât d'accrochage 104 et la turbomachine 102 est fixée sous le mât d'accrochage 104.

Par convention, on appelle X l'axe longitudinal de la turbomachine 102, cet axe X étant parallèle à une direction longitudinale de cette turbomachine 102 et à une direction longitudinale de l'aéronef 50. D'autre part, Y est l'axe transversal de la turbomachine 102 qui est horizontal lorsque l'aéronef 50 est au sol et Z est l'axe vertical ou la hauteur verticale lorsque l'aéronef 50 est au sol, ces trois axes X, Y et Z étant orthogonaux entre eux.

En outre, les termes "avant" et "arrière" doivent être considérés en relation avec une direction d'avancement de l'aéronef 50 pendant le fonctionnement de la turbomachine 102, cette direction étant schématiquement représentée par la flèche F.

La turbomachine 102 et le mât d'accrochage 104 sont globalement symétriques par rapport à un plan médian vertical P (XZ) qui contient l'axe longitudinal X et donc la direction verticale Z. L'axe transversal Y est perpendiculaire au plan médian vertical P.

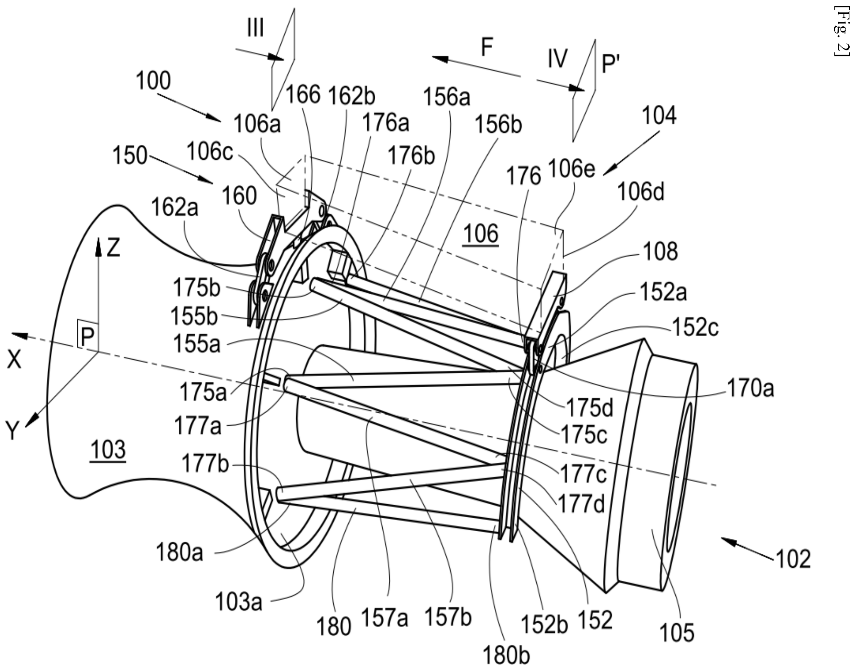

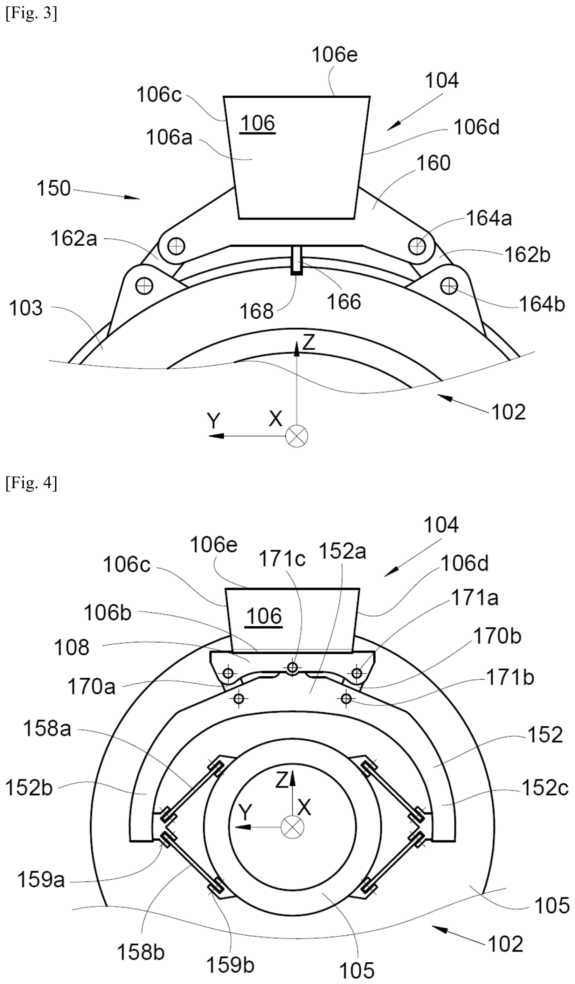

La Fig. 2 montre le système de propulsion 100 selon l'invention et les Figs. 3 et 4 montrent des détails de réalisation du système de propulsion 100.

Le système de propulsion 100 comprend la turbomachine 102 et le mât d'accrochage 104 par lequel la turbomachine 102 est fixée à l'aile 52. Le mât d'accrochage 104 est représenté ici par sa structure rigide 106, également appelée structure primaire, et qui est fixée à la structure de l'aile 52 par tous moyens de solidarisation appropriés et connus de l'homme du métier.

La structure rigide 106 se présente sous la forme d'un caisson qui comporte une partie frontale 106a, située à l'avant de la structure rigide 106, un longeron inférieur 106b s'étendant en dessous de la structure rigide 106 et un longeron supérieur 106e s'étendant au-dessus de la structure rigide 106. La structure rigide 106 comporte également deux parois latérales 106c-d de chaque côté du plan médian vertical P. Ces différents longerons et parois sont fixés les uns aux autres pour former la structure rigide 106. La partie frontale 106e comporte par exemple une paroi frontale et une partie du longeron inférieur 106b et des parois latérales 106c-d.

La turbomachine 102 comprend de l'avant vers l'arrière, un carter avant 103 et un carter arrière 105 qui est fixé à l'arrière du carter avant 103 et dans lequel des éléments de la turbomachine 102 sont logés comme des étages de compression, une chambre de combustion, des étages de turbine et un cône d'éjection. Le carter avant 103 est par exemple un carter de soufflante dans lequel est montée une soufflante de la turbomachine 102, il peut également s'agir du carter qui est juste à l'arrière de la soufflante dans le cas d'une turbomachine à soufflante non carénée.

Le carter avant 103 présente un diamètre supérieur au diamètre du carter arrière 105.

Le carter avant 103 présente à l'arrière une face arrière 103a qui est perpendiculaire à l'axe longitudinal X et s'étend ainsi dans un plan parallèle au plan YZ. Le carter avant 103 et le carter arrière 105 forment des surfaces de révolution autour de l'axe longitudinal X.

Le système de propulsion 100 comprend une attache moteur avant 150 qui assure la fixation entre une partie supérieure du carter avant 103 et la partie frontale 106a de la structure rigide 106.

Le système de propulsion 100 comprend également une arche 152 qui est disposée autour du carter arrière 105 et à l'arrière de la surface arrière 103a du carter avant 103.

Une ferrure arrière 108 est fixée de manière rigide au longeron inférieur 106b sous la structure rigide 106.

L'arche 152 comporte une base 152a qui est fixée de manière articulée à la ferrure arrière 108. L'arche 152 comporte également deux bras 152b-c disposés de part et d'autre du plan médian vertical P, c'est-à-dire que symétriquement par rapport au plan médian vertical P, il y a un bras 152b à bâbord et un bras 152c à tribord. Chaque bras 152b-c présente une première extrémité qui est solidaire de la base 152a et une deuxième extrémité qui est fixée de manière articulée au carter arrière 105. Chaque bras 152b-c peut être un élément fixé à la base 152a ou former un ensemble monobloc avec la base 152a. L'arche 152 présente parallèlement à l'axe longitudinal X, une épaisseur E qui est dimensionnée de manière à supporter les efforts qui y transitent comme dans les fixations arrière de l'état de la technique. L'épaisseur E est répartie de part et d'autre d'un plan d'intégration P'.

Dans le mode de réalisation de l'invention représenté sur la Fig. 2, les deuxièmes extrémités de chaque bras 152b-c de l'arche 152 sont respectivement à 3 heures et 9 heures par rapport à l'axe longitudinal X. Mais les positions des deuxièmes extrémités de chaque bras 152b-c de l'arche 152 peuvent être disposées à +/- 45° par rapport à ces positions représentées.

Le système de propulsion 100 comprend également six bielles qui sont réparties de part et d'autre du plan médian vertical P.

Il y a ainsi deux bielles centrales 155a-b qui sont disposées de part et d'autre du plan médian vertical P, il y a donc une bielle centrale 155a à bâbord et une bielle centrale 155b à tribord. Chaque bielle centrale 155a-b est fixée par l'une de ses extrémités à la face arrière 103a du carter avant 103 par un premier point de liaison centrale 175a-b et par l'autre de ses extrémités à l'arche 152 par un deuxième point de liaison centrale 175c-d.

Les deux bielles centrales 155a-b convergent l'une vers l'autre au niveau des deuxièmes points de liaison centrale 175c-d qui sont au niveau de l'arche 152, c'est-à-dire que les deuxièmes points de liaison centrale 175c-d sont concentrés au même endroit juste en avant de l'arche 152. En d'autres termes, selon l'invention, les deux bielles centrales 155a-b convergent l'une vers l'autre dans une zone de convergence centrale qui est juste en avant de l'arche 152 lorsque, parallèlement à l'axe longitudinal X, la zone de convergence centrale se situe à une distance maximale égale à 1,5 fois l'épaisseur de l'arche 152 en avant du plan d'intégration P'.

Il y a ainsi deux bielles bâbord 157a-b qui sont disposées à bâbord du plan médian vertical P et chaque bielle bâbord 157a-b est fixée par l'une de ses extrémités à la face arrière 103a du carter avant 103 par un premier point de liaison bâbord 177a-b et par l'autre de ses extrémités à l'arche 152 par un deuxième point de liaison bâbord 177c-d.

Les deux bielles bâbord 157a-b convergent l'une vers l'autre au niveau des deuxièmes points de liaison bâbord 177c-d qui sont au niveau de l'arche 152, c'est-à-dire que les deuxièmes points de liaison bâbord 177c-d sont concentrés au même endroit juste en avant de l'arche 152. En d'autres termes, selon l'invention, les deux bielles bâbord 157a-b convergent l'une vers l'autre dans une zone de convergence bâbord qui est juste en avant de l'arche 152 lorsque, parallèlement à l'axe longitudinal X, la zone de convergence bâbord se situe à une distance maximale égale à 1,5 fois l'épaisseur de l'arche 152 en avant du plan d'intégration P'.

Il y a enfin deux bielles tribord 156a-b qui sont disposées à tribord du plan médian vertical P et chaque bielle tribord 156a-b est fixée par l'une de ses extrémités à la face arrière 103a du carter avant 103 par un premier point de liaison tribord (176a-b) et l'autre de ses extrémités à l'arche 152 par un deuxième point de liaison tribord 176. Sur la Fig. 2, seul le deuxième point de liaison tribord 176 de la bielle tribord 156a est visible.

Les deux bielles tribord 156a-b convergent l'une vers l'autre au niveau des deuxièmes points de liaison tribord 176 qui sont au niveau de l'arche 152, c'est-à-dire que les deuxièmes points de liaison tribord 176 sont concentrés au même endroit juste en avant de l'arche 152. En d'autres termes, selon l'invention, les deux bielles tribord 156a-b convergent l'une vers l'autre dans une zone de convergence tribord qui est juste en avant de l'arche 152 lorsque, parallèlement à l'axe longitudinal X, la zone de convergence tribord se situe à une distance maximale égale à 1,5 fois l'épaisseur de l'arche 152 en avant du plan d'intégration P'.

Deux bielles convergent lorsque leurs axes se croisent au niveau d'une zone de convergence. Un tel système de propulsion 100 permet ainsi d'avoir une liaison isostatique entre la turbomachine et le mât d'accrochage par l'intermédiaire des différents éléments de fixation tout en assurant la redondance des liaisons pour la sécurité.

Les points de liaison avec l'arche 152 sont proches de ladite arche 152. La zone de convergence des deux bielles centrales 155a-b au niveau de l'arche 152 est au niveau du plan médian vertical P. La zone de convergence au niveau de l'arche 152 des deux bielles bâbord 157a-b, respectivement des deux bielles tribord 156a-b, est vue de derrière entre 7 heures et 9 heures à bâbord et entre 3 heures et 5 heures à tribord.

Chacun des points de liaison peut prendre la forme d'une liaison encastrement ou d'une liaison rotule. Chaque point de liaison qui n'est pas encastré prend par exemple la forme d'une liaison par chape. Chaque liaison encastrement est réalisée par exemple par soudage, emmanchement en force, serrage par système vis-écrou, ...

Dans le mode de réalisation de l'invention représenté à la Fig. 2, la ferrure arrière 108 et l'arche 152 sont inscrites dans le même plan d'intégration P' moyen qui est perpendiculaire à l'axe longitudinal X.

Dans le mode de réalisation de l'invention représenté sur la Fig. 2, la bielle centrale 155a qui est à bâbord du plan médian vertical P et l'une des bielles bâbord 157a convergent l'une vers l'autre au niveau du premier point de liaison centrale 175a et du premier point de liaison bâbord 177a correspondants, c'est-à-dire que ces deux points de liaison 175a et 177a sont concentrés au même endroit et leurs axes se croisent au niveau d'une zone de convergence au niveau de la face arrière 103a du carter avant 103 qui, vu de derrière, est entre 10 heures et 11 heures.

De la même manière, ici, la bielle centrale 155b qui est à tribord du plan médian vertical P et l'une des bielles tribord 156a convergent l'une vers l'autre au niveau du premier point de liaison centrale 175b et du premier point de liaison tribord 176a correspondants, c'est-à-dire que ces deux points de liaison 175b et 176a sont concentrés au même endroit et leurs axes se croisent au niveau d'une zone de convergence au niveau de la face arrière 103a du carter avant 103 qui, vu de derrière, est à 12 heures.

Pour augmenter encore la raideur du système de propulsion 100, en particulier autour d'un axe perpendiculaire à l'axe longitudinal X, le système de propulsion 100 comporte en outre de part et d'autre du plan médian vertical P, une bielle complémentaire 180. Il y a donc une bielle complémentaire 180 à bâbord et une bielle complémentaire 180 à tribord. Chaque bielle complémentaire 180 est fixée par l'une de ses extrémités à la face arrière 103a du carter avant 103 par un premier point de liaison complémentaire 180a et par l'autre de ses extrémités à l'arche 152 par un deuxième point de liaison complémentaire 180b.

Comme précédemment, chacun des points de liaison complémentaire 180a-b peut prendre la forme d'une liaison encastrement ou d'une liaison rotule.

Dans le mode de réalisation de l'invention représenté ici, la bielle complémentaire 180 qui est à bâbord du plan médian vertical P et la bielle bâbord 157b qui ne converge pas avec la bielle centrale 155a à bâbord, convergent l'une vers l'autre au niveau du premier point de liaison bâbord 177b et du premier point de liaison complémentaire 180a correspondants, c'est-à-dire que ces deux points de liaison 177b et 180a sont concentrés au même endroit et leurs axes se croisent au niveau d'une zone de convergence au niveau de la face arrière 103a du carter avant 103. Les deux points de liaison 177b et 180a sont autour de la zone 3 heures jusqu'à 5 heures.

De la même manière, la bielle complémentaire 180 qui est à tribord du plan médian vertical P et la bielle tribord 156b qui ne converge pas avec la bielle centrale 155b à tribord, convergent l'une vers l'autre au niveau du premier point de liaison tribord 176b et du premier point de liaison complémentaire 180a correspondants, c'est-à-dire que ces deux points de liaison 176b et 180a sont concentrés au même endroit et leurs axes se croisent au niveau d'une zone de convergence au niveau de la face arrière 103a du carter avant 103. Les deux points de liaison 176b et 180a sont autour de la zone 9 heures jusqu'à 7 heures.

La Fig. 4 montre plus clairement un exemple de la fixation entre la base 152a de l'arche 152 et la ferrure arrière 108. Cette fixation est assurée par deux bielles arrière 170a-b et par un troisième point de liaison 171c qui est un point de liaison en attente, c'est-à-dire qu'il ne devient actif que dans le cas d'une défaillance d'une des bielles arrière 170a-b.

Les deux bielles arrière 170a-b sont disposées symétriquement de part et d'autre du plan médian vertical P et chaque bielle arrière 170a-b est fixée de manière articulée par un premier point de liaison 171a à la ferrure arrière 108 et par un deuxième point de liaison 171b à la base 152a. Chaque point de liaison 171a-b lié aux bielles arrière 170a-b prend au moins la forme d'une liaison pivot, mais préférentiellement il prend la forme d'une liaison rotule pour limiter les moments de flexion et chacun présente ici un axe de rotation principal qui est parallèle à l'axe longitudinal X.

Le troisième point de liaison 171c assure une liaison entre la base 152a et la ferrure arrière 108 et il est disposé au niveau du plan médian vertical P. Ce troisième point de liaison 171c prend au moins la forme d'une liaison pivot, mais préférentiellement il prend la forme d'une liaison rotule pour limiter les moments de flexion et il présente ici un axe de rotation principal qui est parallèle à l'axe longitudinal X.

Dans le mode de réalisation de l'invention représenté ici, les bielles arrière 170a-b sont inscrites dans le plan d'intégration P'.

Chaque point de liaison 171a-c prend ici la forme d'une liaison par chape.

Dans le cas du troisième point de liaison 171c, l'arbre de la liaison par chape est de diamètre légèrement inférieur au diamètre des alésages dans lesquels il est emmanché de manière à ne venir en contact avec lesdits alésages uniquement en cas de besoin.

La Fig. 4 montre également un mode de réalisation particulier de la fixation entre la deuxième extrémité de chaque bras 152b-c et le carter arrière 105. Cette fixation est assurée par deux paires de biellettes 158a-b, où les paires sont disposées symétriquement de part et d'autre du plan médian vertical P, et où chaque biellette 158a-b est inscrite dans un plan perpendiculaire à l'axe longitudinal X qui est également le plan dans lequel est inscrite l'arche 152.

Chaque biellette 158a-b est fixée de manière articulée et démontable à la deuxième extrémité du bras 152a-b qui est du même côté par un premier point de liaison 159a et au carter arrière 105 par un deuxième point de liaison 159b.

Ici, pour chaque paire de biellettes 158a-b, les deux biellettes 158a-b sont disposées symétriquement de part et d'autre d'un plan horizontal passant par l'axe longitudinal X, c'est-à-dire le plan XY. La mise en place symétrique permet d'assurer le positionnement du carter arrière 105 par rapport à l'arche 152.

Chaque point de liaison 159a-b lié aux biellettes 158a-b prend au moins la forme d'une liaison pivot, mais préférentiellement il prend la forme d'une liaison rotule pour limiter les moments de flexion et chacun de ces points de liaison 159a-b présente ici un axe de rotation principal qui est perpendiculaire à l'axe de la biellette 158a-b considérée et inscrite dans un plan perpendiculaire à l'axe longitudinal X et qui est également le plan dans lequel est inscrite l'arche 152.

Chaque point de liaison 159a-b prend ici la forme d'une liaison par chape.

Dans le mode de réalisation de l'invention représenté ici, les biellettes 158a-b sont inscrites dans le plan d'intégration P'.

La Fig. 3 montre plus clairement un exemple d'attache moteur avant 150 mis en œuvre dans l'invention, mais l'attache moteur 150 peut avoir une architecture différente.

L'attache moteur avant 150 comporte une ferrure avant 160 qui est fixée à la partie frontale 106a et deux bielles avant 162a-b disposées symétriquement de part et d'autre du plan vertical médian vertical P. Chaque bielle avant 162a-b est fixée de manière articulée par un premier point de liaison 164a à la ferrure avant 160 et par un deuxième point de liaison 164b au carter avant 103. Chaque point de liaison 164a-b lié aux bielles avant 162a-b prend au moins la forme d'une liaison pivot, mais préférentiellement il prend la forme d'une liaison rotule pour limiter les moments de flexion et chacun présente ici un axe de rotation principal qui est parallèle à l'axe longitudinal X. Chaque point de liaison 164a-b prend ici la forme d'une liaison par chape.

L'attache moteur avant 150 comporte également une liaison de type « spigot » avec un pion 166 qui s'étend verticalement, c'est-à-dire parallèlement à l'axe vertical Z et il est inscrit dans le plan médian vertical P.

Le pion 166 est solidaire de la ferrure avant 160 ou du carter avant 103 et il est logé selon le cas dans un alésage 168 du carter avant 103 ou de la ferrure avant 160.

L'ajustement entre l'alésage 168 et le pion 166 est tel qu'il n'y a pas de déplacement selon l'axe longitudinal X ou selon l'axe transversal Y, uniquement des déplacements selon l'axe vertical Z.

Les trois zones de convergence, à savoir celle des deuxièmes points de liaison centrale 175c-d, celle des deuxièmes points de liaison bâbord 177c-d et celle des deuxièmes points de liaison tribord 176 ne sont pas alignées sur une droite perpendiculaire au plan médian vertical P.

## Revendications

1. Système de propulsion (100) pour un aéronef (50), ledit système de propulsion (100) comportant :
- une turbomachine (102) s'étendant autour d'un axe longitudinal (X) et présentant un plan médian vertical (P) contenant l'axe longitudinal (X) et comportant un carter avant (103) avec une face arrière (103a) perpendiculaire à l'axe longitudinal (X) et un carter arrière (105),
- un mât d'accrochage (104) présentant une structure rigide (106) avec une partie frontale (106a) et un longeron inférieur (106b) auquel est fixée une ferrure arrière (108),
- une attache moteur avant (150) qui est fixée entre une partie supérieure du carter avant (103) et la partie frontale (106a) de la structure rigide (106),
- une arche (152) avec une base (152a) et deux bras (152b-c) disposés de part et d'autre du plan médian vertical (P) chaque bras (152b-c) présentant une première extrémité solidaire de la base (152a) et une deuxième extrémité,
- deux bielles centrales (155a-b) disposées de part et d'autre du plan médian vertical (P), où chaque bielle centrale (155a-b) est fixée à la face arrière (103a) du carter avant (103) par un premier point de liaison centrale (175a-b) et à l'arche (152) par un deuxième point de liaison centrale (175c-d),
ledit système de propulsion (100) étant **caractérisé en ce que** ladite base (152a) de l'arche (152 est fixée de manière articulée à la ferrure arrière (108), **en ce que** la deuxième extrémité de chaque bras (152b-c est fixée de manière articulée au carter arrière (105), **en ce que** les deux bielles centrales (155a-b) convergent l'une vers l'autre au niveau des deuxièmes points de liaison centrale (175c-d), et **en ce que** le système de propulsion (100) comporte en outre deux bielles bâbord (157a-b) disposées à bâbord du plan médian vertical (P), où chaque bielle bâbord (157a-b) est fixée à la face arrière (103a) du carter avant (103) par un premier point de liaison bâbord (177a-b) et à l'arche (152) par un deuxième point de liaison bâbord (177c-d), où les deux bielles bâbord (157a-b) convergent l'une vers l'autre au niveau des deuxièmes points de liaison bâbord (177c-d), et deux bielles tribord (156a-b) disposées à tribord du plan médian vertical (P), où chaque bielle tribord (156a-b) est fixée à la face arrière (103a) du carter avant (103) par un premier point de liaison tribord (176a-b) et à l'arche (152) par un deuxième point de liaison tribord (176), où les deux bielles tribord (156a-b) convergent l'une vers l'autre au niveau des deuxièmes points de liaison tribord (176).

2. Système de propulsion (100) selon la revendication 1, **caractérisé en ce que** la ferrure arrière (108) et l'arche (152) sont inscrites dans un même plan d'intégration (P') perpendiculaire à l'axe longitudinal (X).

3. Système de propulsion (100) selon l'une des revendications 1 ou 2, **caractérisé en ce que** la bielle centrale (155a) à bâbord du plan médian vertical (P) et l'une des bielles bâbord (157a) convergent l'une vers l'autre au niveau du premier point de liaison centrale (175a) et du premier point de liaison bâbord (177a) correspondants.

4. Système de propulsion (100) selon l'une des revendications 1 à 3, **caractérisé en ce que** la bielle centrale (155b) à tribord du plan médian vertical (P) et l'une des bielles tribord (156a) convergent l'une vers l'autre au niveau du premier point de liaison centrale (175b) et du premier point de liaison tribord (176a) correspondants.

5. Système de propulsion (100) selon l'une des revendications 1 à 4, **caractérisé en ce qu'**il comporte en outre de part et d'autre du plan médian vertical (P), une bielle complémentaire (180) où chaque bielle complémentaire (180) est fixée à la face arrière (103a) du carter avant (103) par un premier point de liaison complémentaire (180a) et à l'arche (152) par un deuxième point de liaison complémentaire (180b).

6. Système de propulsion (100) selon la revendication 5 lorsqu'elle dépend de la revendication 3 et de la revendication 4, **caractérisé en ce que** la bielle complémentaire (180) à bâbord du plan médian vertical (P) et l'autre des bielles bâbord (157b) convergent l'une vers l'autre au niveau du premier point de liaison bâbord (177b) et du premier point de liaison complémentaire (180a) correspondants, et **en ce que** la bielle complémentaire (180) à tribord du plan médian vertical (P) et l'autre des bielles tribord (156b) convergent l'une vers l'autre au niveau du premier point de liaison tribord (176b) et du premier point de liaison complémentaire (180a) correspondants.

7. Système de propulsion (100) selon l'une des revendications 1 à 6, **caractérisé en ce que** la fixation entre la base (152a) et la ferrure arrière (108) est assurée, d'une part, par deux bielles arrière (170a-b) disposées symétriquement de part et d'autre du plan médian vertical (P), où chaque bielle arrière (170a-b) est fixée de manière articulée par un premier point de liaison (171a) à la ferrure arrière (108) et par un deuxième point de liaison (171b) à la base (152a), et, d'autre part, au niveau du plan médian vertical (P), par un troisième point de liaison (171c) entre la base (152a) et la ferrure arrière (108).

8. Système de propulsion (100) selon la revendication 7 lorsqu'elle dépend de la revendication 2, **caractérisé en ce que** les bielles arrière (170a-b) sont inscrites dans le plan d'intégration (P').

9. Système de propulsion (100) selon l'une des revendications 1 à 8, **caractérisé en ce que** la fixation entre la deuxième extrémité de chaque bras (152b-c) et le carter arrière (105) est assurée par deux paires de biellettes (158a-b) disposées symétriquement par paire, de part et d'autre du plan médian vertical (P), et où chaque biellette (158a-b) est inscrite dans un plan perpendiculaire à l'axe longitudinal (X), et où chaque biellette (158a-b) est fixée de manière articulée à la deuxième extrémité du bras (152a-b) qui est du même côté par un premier point de liaison (159a) et au carter arrière (105) par un deuxième point de liaison (159b).

10. Système de propulsion (100) selon la revendication 9 lorsqu'elle dépend de la revendication 2, **caractérisé en ce que** les biellettes (158a-b) sont inscrites dans le plan d'intégration (P').

11. Système de propulsion (100) selon l'une des revendications 9 ou 10, **caractérisé en ce que** pour chaque paire de biellettes (158a-b), les deux biellettes (158a-b) sont disposées symétriquement de part et d'autre d'un plan horizontal passant par l'axe longitudinal (X).

12. Système de propulsion (100) selon l'une des revendications 1 à 11, **caractérisé en ce que** l'attache moteur avant (150) comporte une ferrure avant (160) fixée à la partie frontale (106a), deux bielles avant (162a-b) disposées symétriquement de part et d'autre du plan médian vertical (P) et un pion (166) vertical solidaire de la ferrure avant (160) ou du carter avant (103) et logé dans un alésage (168) respectivement du carter avant (103) ou de la ferrure avant (160), où chaque bielle avant (162a-b) est fixée de manière articulée par un premier point de liaison (164a) à la ferrure avant (160) et par un deuxième point de liaison (164b) au carter avant (103).

13. Aéronef (50) comportant un système de propulsion (100) selon l'une des revendications précédentes.
